Europäisches Patentamt

European Patent Office

Office européen des brevets

(19)

(11) Numéro de publication : **0 309 329 B1**

# (12) FASCICULE DE BREVET EUROPEEN

(45) Date de publication du fascicule du brevet :
**17.07.91 Bulletin 91/29**

(51) Int. Cl.$^5$ : **B25J 17/02, B25J 9/12**

(21) Numéro de dépôt : **88402359.9**

(22) Date de dépôt : **19.09.88**

(54) **Dispositif d'orientation d'un objet autour de deux axes de rotation.**

(30) Priorité : **21.09.87 FR 8713037**

(43) Date de publication de la demande :
**29.03.89 Bulletin 89/13**

(45) Mention de la délivrance du brevet :
**17.07.91 Bulletin 91/29**

(84) Etats contractants désignés :
**DE GB IT SE**

(56) Documents cités :
**EP-A- 0 178 620
FR-A- 2 504 051
US-A- 4 073 201**

(73) Titulaire : **COMMISSARIAT A L'ENERGIE
ATOMIQUE Etablissement de Caractère
Scientifique Technique et Industriel
31/33, rue de la Fédération
F-75015 Paris (FR)**

(72) Inventeur : **Durand, Patrick
ESIEE c/o 89 rue Falguière
F-75015 Paris (FR)**
Inventeur : **Viette, François
ESIEE c/o 89 rue Falguière
F-75015 Paris (FR)**
Inventeur : **Riwan, Alain
7, rue de l'Egalité
F-91300 Massy (FR)**

(74) Mandataire : **Mongrédien, André et al
c/o BREVATOME 25, rue de Ponthieu
F-75008 Paris (FR)**

EP 0 309 329 B1

Jouve, 18, rue Saint-Denis, 75001 PARIS

## Description

Cette invention, due à la collaboration de MM. M. Riwan, P. Durand et F. Viette, est relative à un dispositif d'orientation d'un objet autour de deux axes de rotation au moyen de deux moteurs qui entraînent chacun en rotation, sans couplage entre eux, l'objet autour d'un des axes.

Elle peut s'appliquer particulièrement à une articulation de poignet de robot.

Les systèmes déjà connus ont comme inconvénient de présenter des mouvements couplés, c'est-à-dire que la mise en rotation de l'objet situé au-delà du poignet autour d'un axe implique une rotation supplémentaire de l'objet autour de l'autre axe, qui n'est pas souhaitée et qu'il faut donc corriger.

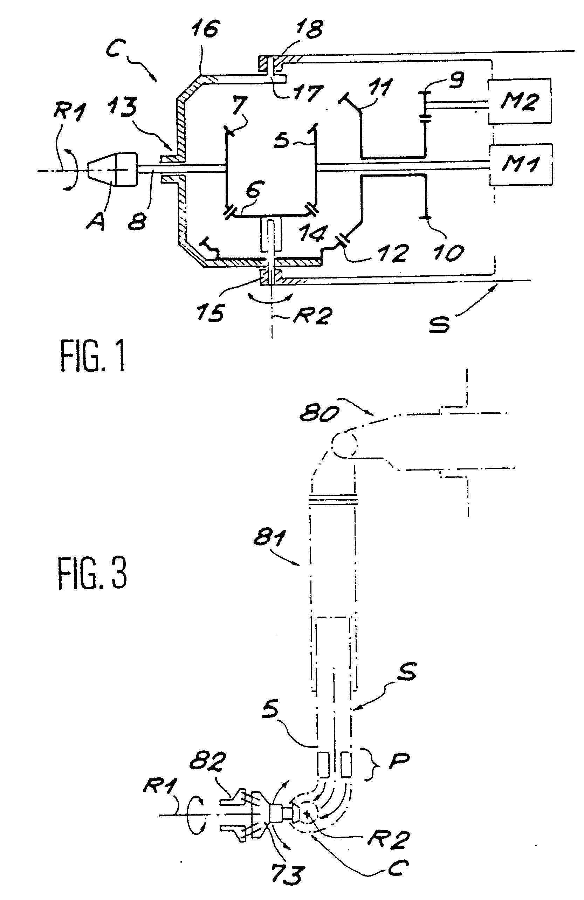

D'après un système connu représenté figure 1, l'objet A peut être orienté autour de deux axes $R_1$ et $R_2$ au moyen de deux moteurs $M_1$ et $M_2$ introduits dans un support S, en fait l'avant-bras du robot.

Les arbres des deux moteurs $M_1$ et $M_2$ sont perpendiculaires à l'axe $R_2$. L'arbre du premier moteur $M_1$ est terminé par un premier pignon 5, conique et en prise avec une première roue dentée conique 6, elle-même en prise avec une deuxième roue dentée conique 7 ; l'axe de rotation de la première roue dentée conique 6 est confondu avec l'axe $R_2$. On obtient, par ce train d'engrenage, un double renvoi d'angle à 90°; l'objet A est fixé à l'extrémité d'un arbre 8 pivotant par rotation de la deuxième roue dentée 7, et qui matérialise l'axe de rotation $R_1$.

L'arbre du second moteur $M_2$ est terminé par un second pignon 9, droit et qui engrène une roue dentée 10 en rotation autour de l'arbre du premier moteur $M_1$ et liée à une troisième roue dentée conique 11, elle-même en prise avec une quatrième roue dentée conique 12. On obtient ainsi un renvoi d'angle de 90° : l'axe de rotation de la quatrième roue dentée 12, matérialisé par un arbre 14 tournant dans un palier 15 du support S et supportant la deuxième roue conique 6, est en fait l'axe $R_2$.

La quatrième roue dentée conique 12 et son arbre 14 font partie intégrante d'une chape C qui comprend en outre un étrier 16 fixé à une extrémité à ladite quatrième roue 12 et terminé à son autre extrémité par un pivot 17 dans le prolongement de l'arbre 14 et tournant (également autour de l'axe $R_2$) dans un palier 18 ménagé dans le support S. L'arbre 8 auquel l'objet A est fixé est soutenu par un palier 13 ménagé dans l'étrier 16.

La rotation de l'objet A autour de l'axe $R_1$ est produite par une rotation du moteur $M_1$ qui met en mouvement la transmission constituée par le pignon conique 5 et les première et deuxième roues coniques 6 et 7. La chape C reste donc immobile, et le découplage des mouvements existe effectivement dans ce cas.

Mais quand on met en marche le moteur $M_2$, la rotation de la chape C -et de l'objet A- autour de l'axe $R_2$, produite par la mise en mouvement de la transmission mécanique composée du pignon droit 9, de la roue dentée 10 et des troisième et quatrième roues dentées coniques 11 et 12, s'accompagne d'une translation de l'objet A, de l'arbre 8 et de la deuxième roue dentée conique 7 à cause du porte-à-faux de l'étrier 16. Comme la première roue dentée conique 6 reste immobile, la deuxième roue dentée conique 7 tourne : la rotation autour de l'axe $R_2$ s'accompagne d'une rotation non souhaitée autour de l'axe $R_1$, qu'il faut ensuite corriger à l'aide du premier moteur $M_1$.

Le découplage des mouvements de rotation n'est donc que partiel. Il en résulte une sérieuse complication du mode d'opération du robot, spécialement gênante dans le cas de machines de production sur une chaîne d'assemblage où des opérations répétitives et rapides sont requises.

Pour une description plus détaillée d'un appareil de ce type, on se reportera au brevet français 2 504 051.

Il existe encore des appareils où le moteur M1 est situé sur la chape C. La transmission composée des pignons et roues 5, 6 et 7 est éliminée. Cette conception permet de réaliser le découplage des rotations mais implique un aboutissement sensible de la chape qui nuit à la rapidité et à la facilité de ses mouvements. De tels appareils sont décrits dans les brevets européen 0 178 620 et américain 4 073 201.

L'invention propose un dispositif qui agence de façon différente cet appareillage à deux moteurs et deux transmissions de manière à associer chaque moteur à la rotation autour d'un seul des axes $R_1$ et $R_2$ de rotation de l'objet A.

Selon l'invention, le premier moteur $M_1$ n'est plus fixé au support S mais à la transmission mécanique du second moteur $M_2$, si bien que la mise en marche de celui-ci produit une rotation de celui-là qui corrige exactement, et à tout instant, la rotation de l'objet autour de l'axe $R_1$ engendrée par la rotation de la chape C autour de l'axe $R_2$.

Plus précisément, l'invention est relative à un dispositif pour orienter un objet comprenant un premier moteur composé d'un stator et d'un rotor lié par l'intermédiaire d'une première transmission à un arbre pivotant autour d'un premier axe sur une chape et solidaire de l'objet, un second moteur commandant la chape en rotation autour d'un second axe par l'intermédiaire d'une seconde transmission, caractérisé en ce qu'il comprend une liaison entre le second moteur et le stator permettant une rotation conjointe du stator et du rotor quand le second moteur est mis en action, et en ce que les transmissions sont agencées de telle sorte que le pivotement de l'arbre ainsi créé à partir du second moteur par l'intermédiaire du premier moteur est égal et de sens opposé à celui créé par le déplacement de l'arbre sur la première transmission à la suite de la rotation de la chape sous l'effet de la même action du second moteur par l'intermédiaire de la seconde transmission.

Dans une réalisation intéressante, les moteurs tournent suivant des axes de rotation identiques, ce qui permet de diminuer substantiellement l'inertie du dispositif.

Dans le cas où les transmissions sont constituées de trains d'engrenages, un mode particulier de réalisation est celui où elles comprennent chacune deux pignons s'engrenant, les pignons de la première transmission étant liés respectivement au premier moteur et à l'axe de rotation de la chape, les pignons de la deuxième transmission étant respectivement liés au rotor et tournant autour de l'axe de rotation de la chape, caractérisé en ce que les rapports des nombres de dents des premier et second pignons sont égaux pour les deux transmissions.

On va maintenant décrire l'invention à l'aide des figures annexées et énumérées ci-dessous à titre illustratif et non limitatif :
- la figure 1, déjà décrite, schématise une réalisation de l'art antérieur et illustre ses désavantages ;
- la figure 2 illustre un mode de réalisation de l'invention ; et
- la figure 3 illustre une application possible de l'invention.

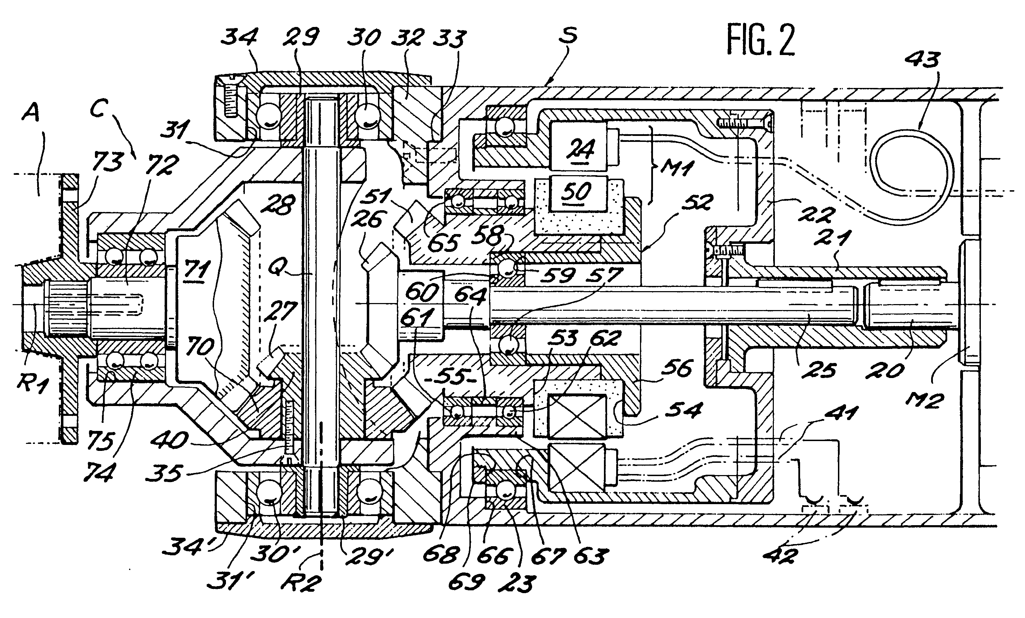

Les objets désignés par des lettres sur la figure 1 se retrouvent également, avec les mêmes fonctions, sur la figure 2.

L'arbre 20 du second moteur $M_2$ entraîne en rotation, à l'aide d'une liaison à clavette, un manchon creux 21 vissé à un barillet 22 de forme générale cylindrique creuse et soutenu par le support S, qui l'entoure, au moyen d'un roulement à billes 23. Le barillet 22 est équipé sur sa surface intérieure du stator 24 du moteur $M_1$. Le stator 24, qui suit le barillet 22 en rotation d'après l'invention, est alimenté par des balais 41 frottant sur des conducteurs circulaires 42 disposés sur le support S. Dans le cas où l'on se contente d'un petit débattement angulaire, on peut utiliser des fils électriques flexibles 43 présentant une longueur libre suffisante pour alimenter le stator 24.

Un arbre de prolongement 25, coaxial à l'arbre 20 du moteur $M_2$, est solidaire de celui-ci par l'intermédiaire du barillet 22 auquel il est relié par une clavette. Il porte un premier pignon conique 26 à son extrémité éloignée du second moteur $M_2$, qui engrène un deuxième pignon conique 27 de manière à former un renvoi d'angle à 90°.

Le deuxième pignon conique 27 est solidaire d'un arbre 28 d'axe $R_2$ sur lequel il est emmanché à force. L'arbre 28 est muni de deux bagues 29, 29' à ses extrémités dont les surfaces extérieures sont en appui respectif sur les bagues internes de deux roulements à billes 30, 30' ; leurs bagues externes sont maintenues dans deux paliers 31, 31' alésés dans une pièce 32 en forme de couronne, qui est vissée et centrée sur le support S par un centrage circulaire 33. Les roulements 30, 30' et donc l'arbre 28 sont maintenus en translation au moyen de deux flasques 34, 34' vissés sur la couronne 32 de façon à clore les paliers 31, 31'.

La chape C est vissée au deuxième pignon conique 27 (par au moins une vis 35) et se déplace donc en rotation avec lui autour de l'axe $R_2$ en entraînant l'objet A, comme on va le décrire plus loin.

Le rotor 50 du premier moteur $M_1$ est concentrique et interne au stator 24. Il est supporté par l'arbre 52 d'un troisième pignon conique 51 sur lequel il est centré ; il est maintenu dans le sens axial entre deux épaulements 53 et 54 réalisés sur deux parties 55 et 56 de l'arbre 52 qui sont assemblées par vissage ; la première partie 55 porte le troisième pignon conique 51, la seconde partie 56 est une butée.

Le troisième pignon conique 51 a le même axe de rotation que le premier pignon conique 26 et leurs arbres respectifs 52 et 25 sont centrés au moyen d'un roulement à billes 57 dont les bagues externe et interne sont en contact respectif avec ces deux arbres, la bague externe étant bloquée axialement entre deux épaulements 58 et 59 des deux parties 55 et 56 et la bague interne venant en butée contre un épaulement 60 de l'arbre 25 sur lequel elle est montée serrée.

Deux autres roulements à billes 61 et 62 sont disposés entre la première partie 55 de l'arbre 52 du troisième pignon conique 51 et la surface intérieure d'une portée cylindrique 63 à l'intérieur du support S ; leur écartement est réglé par une entretoise 64 ménagée sur la première partie 55 de l'arbre 52, et leur position axiale par une butée 65 de la portée 63. Les bagues des roulements 61 et 62 sont montées serrées.

Il résulte de cette construction que le positionnement axial des premier et troisième pignons coniques 26 et 51, ainsi que celui du rotor 50, sont parfaitement définis et inréglables. Le positionnement axial du stator 24 est garanti par le roulement 23 et par l'arbre 20 du moteur $M_2$ muni de roulements non représentés sur la figure, dont la bague externe est montée serrée dans le support S et en butée contre un épaulement 66 de celui-ci, alors que sa bague interne est coincée entre deux épaulements 67 et 68 appartenant respectivement au barillet 22 et à un écrou 69 que l'on visse sur celui-ci.

On notera que, quoique les premier et troisième pignons coniques 26 et 51 soient coaxiaux et contigus pour limiter l'encombrement du dispositif, ils ne sont pas en contact et leurs rotations sont indépendantes.

Le troisième pignon conique 51 engrène un quatrième pignon conique 70 d'axe de rotation $R_2$ qui est monté fou autour d'un arbre 40 prolongeant le deuxième pignon conique 27 et est maintenu axialement, avec un léger jeu, entre ledit deuxième pignon conique 27 et la chape C. Des paliers lisses, non représentés ici, peuvent être prévus pour assurer un faible frottement.

Le quatrième pignon conique 70 engrène un cinquième pignon conique 71 en formant un renvoi d'angle à 90° : l'axe de rotation du cinquième pignon conique 71, matérialisé par un arbre 72, est $R_1$. L'objet A est fixé sur un plateau 73 solidaire de l'arbre 72. Un roulement à double rangée de billes 74 est introduit entre l'arbre 72 et un alésage 75 de la chape C.

Il s'agit à présent de décrire le fonctionnement du dispositif.

Pour orienter l'objet A autour de l'axe $R_1$, le premier moteur $M_1$ est mis en marche : le stator 24 reste immobile et le rotor 50 tourne, entraînant successivement en rotation les troisième, quatrième et cinquième pignons coniques 51, 70 et 71 ainsi que le plateau 73. Le reste du dispositif, et en particulier la chape C, reste immobile. Le découplage est donc réalisé.

Pour orienter l'objet A autour de l'axe $R_2$, le second moteur $M_2$ est mis en marche et entraîne donc les premier et deuxième pignons coniques 26 et 27, la chape C et finalement l'objet A. Il entraîne également en rotation le barillet 22 et le stator 24 du premier moteur $M_1$.

Le couplage magnétique entre le stator 24 et le rotor 50 implique qu'ils vont tourner conjointement, sans mouvement relatif : les troisième, quatrième et cinquième pignons coniques 51, 70 et 71 sont donc également entraînés.

Désignons par d le nombre de dents d'un pignon, par θ son angle de rotation, avec un sens positif commun (par exemple, le sens trigonométrique vu par un observateur situé au point Q commun à tous les axes de rotation des pignons).

Si le premier pignon 26 tourne d'un angle $+ \theta 26$, le deuxième pignon 27 et la chape C tournent d'un angle $\theta 27 = - \theta 26 (d26/d27)$. Si le quatrième pignon 70 était immobile, le cinquième pignon 71 serait assujetti à une rotation $\theta 71 = (d70/d71)\theta 27$.

Mais le troisième pignon 51 est entraîné en rotation d'un angle $\theta 51 = \theta 26$, et on peut donc en déduire qu'il existe une rotation du quatrième pignon 70 d'angle $\theta 70 = -(d51/d70)\theta 51$ et une rotation corrélative supplémentaire du cinquième pignon 71 d'angle $\theta' 71 = -(d70/d71)\theta 70$.

On veut réaliser $\theta 71 + \theta' 71 = 0$. Il est immédiat que cette condition est équivalente, dans le mode de réalisation décrit, à $d51/d70 = d26/d27$, c'est-à-dire que les rapports de denture entre les premier et deuxième pignons 26 et 27 d'une part, entre les troisième et quatrième pignons 51 et 70 d'autre part, sont égaux. Le nombre de dents du cinquième pignon 71 est indifférent.

Cette condition permet de réaliser un découplage parfait : le second moteur $M_2$ ne commande plus qu'une rotation de l'objet A autour de l'axe $R_2$.

La figure 3 représente une application envisagée mais non exclusive. Un robot 80 est muni d'un bras tournant 81 terminé par le support S. Le dispositif décrit dans le texte du présent brevet constitue ce qu'on pourrait appeler le poignet P du robot 80. L'objet A orienté est un outil tel qu'une pince 82.

De nombreux aménagements, évidents pour l'homme de l'art, peuvent être apportés à la réalisation décrite, notamment en ce qui concerne la disposition et la constitution des chaînes de transmission de mouvement, et ne sortent pas du cadre de l'invention. On préfère cependant placer le premier moteur $M_1$ coaxialement au deuxième moteur $M_2$ de façon à limiter l'inertie rotative du dispositif.

## Revendications

1. Dispositif pour orienter un objet (A) comprenant un premier moteur ($M_1$) composé d'un stator (24) et d'un rotor (50) lié par l'intermédiaire d'une première transmission (51, 70, 71) à un arbre (72) pivotant autour d'un premier axe ($R_1$) sur une chape (C) et solidaire de l'objet (A), un second moteur ($M_2$) commandant la chape (C) en rotation autour d'un second axe (28, $R_2$) par l'intermédiaire d'une seconde transmission (25, 26, 27), caractérisé en ce qu'il comprend une liaison (22) entre le second moteur ($M_2$) et le stator (24) permettant une rotation conjointe du stator (24) et du rotor (50) quand le second moteur ($M_2$) est mis en action, et en ce que les transmissions sont agencées de telle sorte que le pivotement de l'arbre (72) ainsi créé à partir du second moteur ($M_2$) par l'intermédiaire du premier moteur ($M_1$) est égal et de sens opposé à celui créé par le déplacement de l'arbre (72) sur la première transmission à la suite de la rotation de la chape (C) sous l'effet de la même action du second moteur ($M_2$) par l'intermédiaire de la seconde transmission.

2. Dispositif pour orienter un objet selon la revendication 1, caractérisé en ce que les transmissions sont des trains d'engrenages.

3. Dispositif pour orienter un objet selon l'une quelconque des revendications 1 ou 2, caractérisé en ce que le stator (24) est fixe par rapport au second moteur ($M_2$) et en ce que les moteurs ($M_1$, $M_2$) tournent suivant un même axe de rotation.

4. Dispositif pour orienter un objet selon les revendications 2 et 3, caractérisé en ce que les transmissions comprennent chacun deux pignons s'engrenant, les pignons de la première transmission (51, 70) étant liés respectivement au premier moteur ($M_1$) et à l'axe de rotation (28) de la chape (C), les pignons de la seconde transmission (26, 27) étant respectivement liés au rotor (50) et tournant autour de l'axe de rotation (28) de la chape (C), caractérisé en ce que les rapports des nombres de dents des premier (51 et 26) et second (70 et 27) pignons sont égaux pour les deux transmissions.

## Patentansprüche

1. Vorrichtung zum Orientieren eines Objekts (A) mit einem ersten Motor (M₁), der aus einem Stator (24) und einem Rotor (50) besteht, der über eine erste Übertragung (51, 70, 71) mit einer sich um eine erste Achse (R₁) auf einem Gabelgelenk (C) drehenden Welle (72) verbunden ist und an dem Objekt (A) befestigt ist, mit einem zweiten Motor (M₂), der das Gabelgelenk (C) bei der Drehung um eine zweite Achse (28, R₂) über eine zweite Übertragung (25, 26, 27) steuert, dadurch gekennzeichnet, daß sie eine Verbindung (22) zwischen dem zweiten Motor (M₂) und dem Stator (24) umfaßt, die eine verbundene Rotation des Stators (24) und des Rotors (50) ermöglicht, wenn der zweite Motor (M₂) in Betrieb gesetzt wird, und daß die Übertragungen so betrieben werden, daß die so durch den zweiten Motor (M₂) über den ersten Motor (M₁) erzeugte Drehung der Welle gleich und in entgegengesetzter Richtung zu der durch die Bewegung der Welle (72) auf der ersten Übertragung in Folge der Drehung des Gabelgelenks (C) unter der Einwirkung des gleichen Betriebs des zweiten Motors (M₂) über die zweite Übertragung erzeugt ist.

2. Vorrichtung zum Orientieren eines Objekts nach Anspruch 1, dadurch gekennzeichnet, daß die Übertragungen Zahnradgetriebe sind.

3. Vorrichtung zum Orientieren eines Objekts nach einem der Ansprüche 1 oder 2, dadurch gekennzeichnet, daß der Stator (24) bezüglich des zweiten Motors (M₂) fest ist und daß sich die Motoren (M₁, M₂) einer gleichen Rotationsachse folgend drehen.

4. Vorrichtung zum Orientieren eines Objekts nach einem der Ansprüche 2 und 3, dadurch gekennzeichnet, daß die Übertragungen jeweils zwei miteinander verzahnte Ritzel umfassen, wobei die Ritzel der ersten Übertragung (51, 79) jeweils mit dem ersten Motor (M₁) und der Drehachse (28) des Gabelgelenks (C) verbunden sind und die Ritzel der zweiten Übertragung (26, 27) jeweils mit dem Rotor verbunden sind und sich um die Drehachse des Gabelgelenks (C) drehen, dadurch gekennzeichnet, daß die Verhältnisse der Anzahl der Zähne der ersten (51 und 26) und der zweiten (70 und 27) Ritzel für die beiden Übertragungen gleich sind.

## Claims

1. Device for orienting an object (A) comprising a first motor (M₁) constituted by a stator (24) and a rotor (50) linked via a first transmission (51, 70, 71) to a shaft (72) pivoting about a first axis (R₁) on a fork joint (C) and integral with the object (A), a second motor (M₂) controlling the fork joint (C) in rotation about a second axis (28, R₂) via a second transmission (25, 26, 27), characterized in that it comprises a link (22) between the second motor (M₂) and the stator (24) permitting a joint rotation of the stator (24) and the rotor (50) when the second motor (M₂) is put into action and in that the transmissions are arranged in such a way that the pivoting of the shaft created in this way from the second motor (M₂) via the first motor (M₁) is equal and of opposite sense to that created by the displacement of the shaft (72) on the first transmission as a result of the rotation of the fork joint (C) under the effect of the same action of the second motor (M₂) via the second transmission.

2. Device for orienting an object according to claim 1, characterized in that the transmissions are gear trains.

3. Device for orienting an object according to any one of the claims 1 or 2, characterized in that stator (24) is fixed relative to the second motor (M₂) and in that the motors (M₁, M₂) rotate in accordance with the same rotation axis.

4. Device for orienting an object according to claims 2 and 3, characterized in that in each case the transmissions have two meshing gears, the gears of the first transmission (51, 70) being respectively linked to the first motor (M₁) and the rotation axis (28) of the fork joint (C), the pinions of the second transmission (26, 27) being respectively linked to the rotor (50) and rotate about the rotation axis (28) of the fork joint (C), characterized in that the ratios of the numbers of teeth of the first (51, 26) and second (70, 27) gears are equal for both transmissions.

FIG. 1

FIG. 3

FIG. 2